(19) Europäisches Patentamt
European Patent Office
Office européen des brevets

(11) Veröffentlichungsnummer: **0 520 261 B1**

(12) **EUROPÄISCHE PATENTSCHRIFT**

(45) Veröffentlichungstag der Patentschrift: **28.12.94**

(51) Int. Cl.$^{5}$: **B29C 33/62**, B29C 33/64

(21) Anmeldenummer: **92109962.8**

(22) Anmeldetag: **13.06.92**

# (54) Trenn- und Gleitmittel für Gummiformkörper.

(30) Priorität: **27.06.91 DE 4121266**

(43) Veröffentlichungstag der Anmeldung:
**30.12.92 Patentblatt 92/53**

(45) Bekanntmachung des Hinweises auf die Patenterteilung:
**28.12.94 Patentblatt 94/52**

(84) Benannte Vertragsstaaten:
**DE ES FR GB IT**

(56) Entgegenhaltungen:
**EP-A- 0 445 614**
**FR-A- 2 439 229**
**GB-A- 1 248 661**
**GB-A- 2 057 495**

(73) Patentinhaber: **Th. Goldschmidt AG**
**Goldschmidtstrasse 100**
**D-45127 Essen (DE)**

(72) Erfinder: **Lammerting, Helmut**
**Schweerstrasse 12**
**W-5812 Herbede (DE)**
Erfinder: **Dörrbecker, Fred**
**Windmühlenstrasse 10**
**W-4300 Essen 1 (DE)**

**EP 0 520 261 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Trenn- und Gleitmittel für Gummiformkörper mit einem Gehalt an Polyoxyalkylen-Polysiloxan-Blockmischpolymerisaten und/oder Polyoxyalkylendiolen und/oder Polyoxyalkylenpolyolen und gegebenenfalls üblichen Zusatzstoffen, wie Netzmittel oder Korrosionsinhibitoren.

Die Erfindung betrifft insbesondere ein Trenn- und Gleitmittel für die Herstellung von Krümmerschläuchen aus Gummi, welche vor ihrer Vulkanisation auf geformte Stahldornen aufgezogen und nach der Vulkanisation von diesen Stahldornen wieder abgezogen werden, wobei das Trennmittel auf die Innenseite der zu vulkanisierenden Formkörper vor dem Aufziehen auf die Dorne aufgetragen wird.

Die Erfindung betrifft in einer besonderen und bevorzugten Ausgestaltung Trenn- und Gleitmittel in Form eines sich bei Temperaturen oberhalb 40 °C verflüssigenden Geles.

Bei der Herstellung von Gummiformkörpern benötigt man Trennmittel, um die geformten Gummiwaren aus den Formen entnehmen zu können und ein Ankleben der Formkörper an den Formwänden zu vermeiden. Häufig wird an ein derartiges Trennmittel aber auch die Forderung gestellt, daß es die Reibung des Gummiformkörpers an der Wand eines formgebenden Elementes verringern soll.

Besonders schwierige Gleit- und Trennprobleme treten bei der Herstellung von sogenannten Krümmerschläuchen, wie sie beispielsweise im Automobilbau und bei Wasch- und Reinigungsmaschinen benötigt werden, auf. Hierbei wird ein vulkanisierbarer Rohling auf einen mitunter sehr kompliziert geformten Dorn aufgezogen. Nach der Vulkanisation muß der heiße Gummiformkörper von dem Dorn abgezogen werden, wozu erheblicher Kraftaufwand notwendig ist. Die benötigte Kraft wird einerseits durch die Formgebung des Dornes und andererseits durch die Haftung des Formkörpers auf dem Dorn bestimmt.

Zur Vermeidung der Haftung und Verbesserung der Gleitfähigkeit hat man derartige zu vulkanisierende Rohlinge, die auf einen gekrümmten Dorn gezogen werden sollen, mit Dispersionen von Silikonölen, Glycerin und Wachsen behandelt. Hierdurch wird zwar die Haftung und Reibung vermindert, jedoch geschieht dies nicht in einem technisch befriedigenden Ausmaß.

Ein verbessertes Trenn- und Gleitmittel, insbesondere für die Herstellung von Krümmerschläuchen ist in der DE-PS 29 28 810 beschrieben. Es besteht aus einem Gemisch von a) Monoalkylethern von Oxyethylen-Oxypropylen-Copolymeren, wobei das Gewichtsverhältnis von Oxyethylengruppen zu Oxypropylengruppen 25 bis 75 zu 75 bis 25 beträgt und b) Polyoxyalkylen-Polysiloxan-Mischpolymerisaten, welche in der Komponente a) löslich oder dispergierbar sind.

Der US-PS 4 689 082 kann eine leicht abwaschbare Trennmittelzubereitung für zu vulkanisierende Formkörper entnommen werden, welche aus 40 bis 99 % eines Oxyethylen-Oxypropylen-Copolymeren und 1 bis 60 % eines ethoxylierten Alkylphenols besteht.

Die vorliegende Erfindung befaßt sich mit dem technischen Problem, die Trenn- und Gleiteigenschaften derartiger Mittel zu verbessern.

Überraschenderweise wurde eine deutliche Verbesserung der Trenn- und Gleiteigenschaften dieser aus dem Stand der Technik bekannten Trennmittel festgestellt, wenn sie erfindungsgemäß mindestens 50 Gew.-% eines Polyoxyethylenesters der gegebenenfalls gehärteten Ricinolsäure mit einem mittleren Molekulargewicht von 1200 bis 4000 bevorzugt von 2400 - 3000 enthalten.

Der Polyoxyethylenester der gegebenenfalls hydrierten Ricinolsäure weist bei einem mittleren Molekulargewicht von 1200 bis 4000 etwa 20 bis 85 Oxyethyleneinheiten auf und stellt eine ölige oder wachsartige, wasserdispergierbare oder wasserlösliche Masse dar. Vorzugsweise weist der Polyoxyethylenester der Ricinolsäure ein mittleres Molekulargewicht von 2000 bis 3000 auf. Von besonderer Bedeutung ist die biologische Abbaubarkeit des Polyoxyethylenesters der gegebenenfalls gehärteten Ricinolsäure.

Ein erfindungsgemäßes Gleit- und Trennmittel, welches mindestens 50 Gew.-% eines Polyoxyethylenesters der gegebenenfalls gehärteten Ricinolsäure mit einem mittleren Molekulargewicht von 1200 bis 4000 enthält, ist einem entsprechenden Mittel des Standes der Technik unter anderem dadurch überlegen, daß es physiologisch einwandfrei und gut mit kaltem Wasser auswaschbar ist und universell bei verschiedenen Kautschukmischungen angewendet werden kann.

Das erfindungsgemäße Trennmittel wird wie die entsprechenden Produkte des Standes der Technik üblicherweise im Tauchverfahren in das Schlauchinnere eingebracht. Dabei läßt sich jedoch nicht immer vermeiden, daß Teile des Trenn- und Gleitmittels auch auf die Oberfläche der zu vulkanisierenden Gummiformkörper gelangen oder abtropfen. Dies kann aber zu Behinderungen des Bedienungspersonals beim Abziehen der vulkanisierten Formkörper führen. Die auf der äußeren Oberfläche befindlichen Gleitmittel können die zu vulkanisierenden Formlinge glatt und rutschig machen. Außerdem kann beim Tauchverfahren ein Teil der eingesetzten Trennmittel durch Abtropfen verloren gehen.

Man hat deshalb auch bereits versucht, Trennmittel direkt beim Extrudieren durch eine geeignete Düse im Extrudierkopf in das Innere der Formlinge zu sprühen. Hierzu soll das Trenn- und Gleitmittel in der

Wärme flüssig, bei Lagertemperaturen aber möglichst tropffest sein, um ein Auslaufen des Trennmittels bei der Zwischenlagerung der extrudierten Formkörper vor der Vulkanisation zu vermeiden.

Die vorliegende Erfindung befaßt sich in einer besonderen Ausgestaltung des erfindungsgemäßen Trenn- und Gleitmittels mit diesem technischen Problem des Einbringens von Trenn- und Gleitmitteln in das Innere des Formlings während des Extrudierens. Dabei sind an ein solches Mittel folgende Forderungen zu stellen:

Das Gleit- und Trennmittel soll

1. bei der Lagerung vor der Verwendung eine stabile Zubereitung bilden und darf sich nicht entmischen oder in reine Bestandteile separieren,
2. bei Raumtemperatur gelartig oder fest und bei Extrudiertemperatur flüssig und versprühbar sein,
3. nach der Vulkanisation mit Wasser, insbesondere kaltem Wasser, gut auswaschbar sein,
4. das Abwasser möglichst wenig belasten und biologisch abbaubar sein.

Diese Anforderungen werden von einem erfindungsgemäßen Trenn- und Gleitmittel erfüllt, welches durch einen weiteren zusätzlichen Gehalt von bis zu 12 Gew.-% eines Polyoxyethylenethers eines aliphatischen Alkohols mit 30 bis 50 Kohlenstoffatomen mit einem mittleren Molekulargewicht von 500 bis 3000 gekennzeichnet ist. Vorzugsweise ist der Polyoxyethylenether ein Anlagerungsprodukt von Ethylenoxid an einen aliphatischen Alkohol mit 40 bis 50 Kohlenstoffatomen und weist ein mittleres Molekulargewicht von 800 bis 1500 auf.

In Verbindung mit den anderen Bestandteilen der Zubereitung gewährleistet diese Komponente, daß die Trennmittelzubereitung das gewünschte Viskositätsverhalten zeigt und die Zubereitung unterhalb 40 °C gelartig pastös und oberhalb 40 °C flüssig vorliegt. Hierdurch kann die Zubereitung durch den Extrudierkopf bei der Extrusion des Formteils in dessen Inneres und auf dessen innere Wandungen gespritzt werden. Nach dem Abkühlen liegt die Zubereitung gelförmig vor und ist nun gehindert, bei der Zwischenlagerung bis zur Vulkanisation aus dem Formkörper auszulaufen oder zu tropfen.

Ein bevorzugtes erfindungsgemäßes Trenn- und Gleitmittel ist gekennzeichnet durch einen Gehalt von
50 bis 93 Gew.-% eines Polyoxyethylenesters der gegebenenfalls gehärteten Ricinolsäure mit einem mittleren Molekulargewicht von 2000 bis 4000,
5 bis 38 Gew.-% eines Polyoxyalkylen-Polysiloxan-Blockmischpolymerisates und/oder eines Polyoxyalkylendi- oder triols,
2 bis 12 Gew.-% eines Polyoxyethylenethers eines aliphatischen Alkohols mit 30 bis 50 Kohlenstoffatomen mit einem mittleren Molekulargewicht von 500 bis 3000,
und gegebenenfalls üblichen Zusatzstoffen, wie Netzmittel oder Korrosionsinhibitoren, wobei alle Bestandteile zusammen 100 Gew.-% ergeben.

Besonders bevorzugt ist ein Gleit- und Trennmittel, welches gekennzeichnet ist durch einen Gehalt von
60 bis 83 Gew.-% eines Polyoxyethylenesters der gegebenenfalls gehärteten Ricinolsäure mit einem mittleren Molekulargewicht von 2000 bis 3000,
12 bis 23 Gew.-% eines Polyoxyalkylen-Polysiloxan-Blockmischpolymerisates und/oder eines Polyoxyalkylendi- oder triols,
2 bis 12 Gew.-% eines Polyoxyethylenethers eines aliphatischen Alkohols mit 30 bis 50 Kohlenstoffatomen mit einem mittleren Molekulargewicht von 500 bis 3000 und
3 bis 5 Gew.-% eines anionaktiven Netzmittels,
wobei alle Bestandteile zusammen 100 Gew.-% ergeben.

Dabei hat sich als insbesondere bevorzugt ein Trenn- und Gleitmittel erwiesen, welches durch einen sich auf 100 Gew.-% ergänzenden Gehalt von
60 bis 80 Gew.-% eines Polyoxyethylenesters der gegebenenfalls gehärteten Ricinolsäure mit einem mittleren Molekulargewicht von 2000 bis 3000,
12 bis 18 Gew.-% eines Polyoxyalkylen-Polysiloxan-Blockmischpolymerisates und/oder eines Polyoxyalkylendi- oder triols,
2 bis 12 Gew.-% eines Polyoxyethylenethers eines aliphatischen Alkohols mit 30 bis 50 Kohlenstoffatomen mit einem mittleren Molekulargewicht von 500 bis 3000,
3 bis 5 Gew.-% eines anionaktiven Netzmittels und
3 bis 5 Gew.-% eines Korrosionsinhibitors,
wobei alle Bestandteile zusammen 100 Gew.-% ergeben, gekennzeichnet ist.

Als Polyoxyalkylen-Polysiloxan-Blockmischpolymerisate können die aus dem Stand der Technik bekannten Copolymerisate, bei denen die Polyoxyalkylenblöcke mit den Polysiloxanblöcken durch Si-C- oder Si-O-C-Bindungen verknüpft sind, verwendet werden. Die Copolymerisate sollen wasserlöslich oder dispergierbar sein. Beispiele geeigneter Copolymerisate sind Verbindungen der allgemeinen Formel

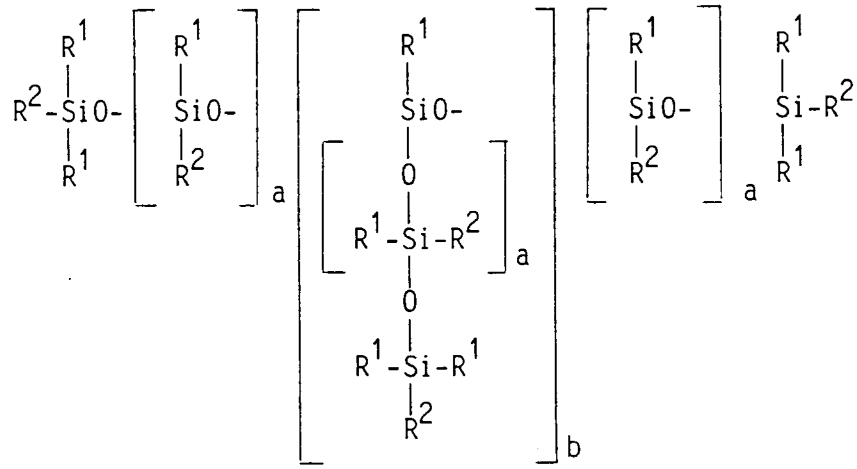

wobei die Reste $R^1$ und $R^2$ Alkylreste, vorzugsweise Methylreste sind und mindestens 1 Rest $R^2$, vorzugsweise jedoch 2 bis 10 Reste $R^2$ Polyoxyalkylenreste der Formel $-R^3(C_nH_{2n}O-)R^4$ sind. Dabei ist $R^3$ ein Sauerstoffrest oder der Rest $-(CH_2)_3O-$. Der Rest $R^4$ ist ein Wasserstoff- oder niederer Alkylrest mit 1 bis 4 Kohlenstoffatomen. Der Index n hat einen durchschnittlichen Wert von 2,0 bis 2,5. a hat einen Wert von 1 bis 100, b hat einen Wert von 0 bis 10.

Das Polyoxyalkylendi- oder triol ist vorzugsweise aus Oxyethylen- und gegebenenfalls zusätzlich aus Oxypropyleneinheiten aufgebaut. Es muß wasserlöslich oder dispergierbar sein und hat vorzugsweise ein durchschnittliches Molekulargewicht von 2000 bis 4000.

Von besonderer Bedeutung ist der Polyoxyethylenether eines aliphatischen Alkohols mit 30 bis 50 Kohlenstoffatomen und einem mittleren Molekulargewicht von 500 bis 3000. Vorzugsweise ist der Polyoxyethylenether ein Anlagerungsprodukt von Ethylenoxid an einen aliphatischen Alkohol mit 40 bis 50 Kohlenstoffatomen und weist ein mittleres Molekulargewicht von 800 bis 1500 auf.

Als Netzmittel zur Verbesserung der Auswaschbarkeit sind die bekannten anionaktiven Tenside verwendbar. Besonders geeignet ist das Natriumlaurylethersulfat.Andere geeignete Netzmittel sind zum Beispiel die Dodecylbenzolsulfonate.

Als Korrosionsschutzmittel kann man ebenfalls die aus dem Stand der Technik bekannten Produkte verwenden. Geeignet ist zum Beispiel das Triethanolammoniumsalz einer Alkylarylamidocarbonsäure.

Die erfindungsgemäßen Zubereitungen erfüllen alle eingangs gestellten Forderungen. Dabei ist ihre biologische Abbaubarkeit von besonderem Interesse, wobei insbesondere die Polyoxyalkylenester der gehärteten Ricinolsäure besonderes gut abbaubar sind.

In den folgenden Beispielen werden verschiedene erfindungsgemäße Zubereitungen gezeigt und ihre anwendungstechnischen Eigenschaften näher erläutert. In der Tabelle 1 ist die Zusammensetzung von 6 Trennmitteln angegeben, wobei die Trennmittel 1 bis 4 erfindungsgemäß zusammengesetzt sind und die Trennmittel 5 und 6 Vergleichsprodukte des Standes der Technik darstellen. In der Tabelle 2 sind die Viskositäten der Zubereitungen 1 bis 6 angegeben.

1. Aufbringen des Trenn- und Gleitmittels durch Tauchen

Die erfindungsgemäßen Zubereitungen gemäß Beispiel 1 und 2, deren Substanzen ineinander löslich sind, werden durch scherkraftarmes Mischen in einem Rührwerkbehälter erstellt. Gemäß Beispiel 1 wird die flüssig vorliegende Zubereitung in einer Krümmerschlauchfertigung anwendungstechnisch überprüft. Dazu wird ein nichtvulkanisiertes Schlauchstück aus EPDM-Kautschuk von 700 mm Länge und 32 mm Innendurchmesser in eine Trennmittelzubereitung gemäß Beispiel 1 eingetaucht, wobei das Trennmittel ins Innere des Schlauches läuft und dort die Wandung benetzt. Für ein Schlauchstück werden 4 g Trennmittel benötigt. Unmittelbar danach wird dieses Schlauchstück auf einen gekrümmten Dorn manuell aufgezogen. Dabei werden geringe Aufschiebkräfte beobachtet. Daraufhin erfolgt die Vulkanisation mit einem bei 180 °C mit Dampf beheizten Vulkanisationskessel. Die Vulkanisationszeit beträgt 20 Minuten. Danach wird das vulkanisierte Schlauchstück von dem Dorn abgezogen. Der ausvulkanisierte Formkörper läßt sich ohne größere Kraftanstrengungen von den Dornen entfernen. Dieser Zyklus wird ca. 60mal durchgeführt. Die Dorne zeigten danach noch ein einwandfreies Aussehen.

In analoger Weise wird die erfindungsgemäße Zubereitung gemäß Beispiel 2 angewendet. Auch in diesem Fall werden sehr geringe Aufschiebkräfte beobachtet und jeweils nach der Vulkanisation ein einwandfreies Abtrennen des Formkörpers vom Dorn festgestellt.

2. Aufbringen des Trenn- und Gleitmittels beim Extrudieren

Gemäß Beispiel 3 wird eine Mischung aller Bestandteile erstellt und auf ca. 90 °C erwärmt. Bei dieser Temperatur sind alle Komponenten flüssig und miteinander mischbar und können durch scherkraftarmes Rühren homogen verteilt werden. Nach dem Erkalten entsteht eine homogene Mischung, die unterhalb 40 °C nicht mehr fließfähig ist und somit eine pastöse Konsistenz aufweist. Bei der Applikation wird dieses Trennmittel auf ca. 70 °C in einem Druckbehälter erwärmt. Der Auftrag erfolgt mittels Druckluft über Düsen, die direkt im Extruderkopf angebracht sind. Über ein Regelsystem, das gleichzeitig Extrusionsgeschwindigkeit und Schlauchdicke berücksichtigt, erfolgt die Steuerung der Auftragsmenge. Es wird für diesen Versuch gemäß Beispiel 3 eine Auftragsmenge von 1 g/m extrudierten Schlauches eingestellt. Nach dem Auskühlen wird der endlos gefertigte Schlauch auf die erforderlichen Längen zugeschnitten und im Stapel zwischengelagert. Auf der Innenwandung des Schlauches wird ein geschlossener dünner Trennmittelfilm beobachtet, der eine gelartige Struktur aufweist und aus den zugeschnittenen Schlauchstücken nicht austropfen kann. Für ein Schlauchstück von 700 mm Länge und 32 mm Innendurchmesser werden 0,7 g Trennmittel benötigt. Der auf diese Art und Weise präparierte Schlauch wird auf einen gekrümmten Dorn aufgeschoben. Dieser Vorgang wird ohne besondere Kraftanwendung bewerkstelligt. Die aufgeschobenen Schlauchstücke werden dann in einem Vulkanisationskessel 20 Minuten bei 180 °C mit Wasserdampf vulkanisiert. Nach der Vulkanisation wird der nun geformte Schlauch von dem Dorn abgezogen. Das Abziehen erfolgt ohne besondere Kraftanstrengung. Insgesamt werden 60 Schlauchstücke, die die erfindungsgemäßen Trennmittel gemäß Beispiel 3 enthalten, vulkanisiert. Es ist in allen Fällen eine einwandfreie Entformung erkennbar. In analoger Weise wird die erfindungsgemäße Zubereitung gemäß Beispiel 4 überprüft. Auch dort zeigt sich, daß ein einwandfreies Aufschieben der Rohlinge und Abziehen der ausvulkanisierten Formkörper gegeben ist.

3. Vergleich mit Produkten des Standes der Technik

Die Produkte des Standes der Technik gemäß Beispiel 5 und 6, deren Mischungen praktisch flüssig vorliegen, werden in analoger Weise gemäß Beispiel 1 bzw. 2 überprüft. In beiden Fällen zeigt sich, daß das Aufschieben der Rohlinge und das Abziehen der ausvulkanisierten Schläuche bei analoger Verarbeitungsweise mit Dornen gleicher Geometrie mit einer größeren Kraftanstrengung verbunden ist. Nach Ablauf von 60 Verarbeitungszyklen zeigen sich bereits schwarze Ablagerungen auf den Dornen. Dieser Befund trifft für beide Zubereitungen gemäß Beispiel 5 und 6 zu. Da die Substanzen unterhalb 40 °C und bei Raumtemperatur flüssig vorliegen, können diese nicht während des Extrudierens angewendet werden, da sie aus dem Schlauch tropfen.

4. Auswaschen der Trenn- und Gleitmittel aus den vulkanisierten Schläuchen

Die entformten EPDM-Schlauchstücke gemäß Beispiel 1 bis 6 werden zur Entfernung der Trennmittelrückstände in einer Industriewaschmaschine ca. 15 Minuten lang bei 40 °C behandelt. In allen Fällen zeigt sich eine gute Löslichkeit und somit auch ein gutes Auswaschverhalten der verwendeten Trennmittel.

Die geschilderten Befunde zeigen, daß mit den erfindungsgemäßen Trenn- und Gleitmitteln ein reibungsloser Fertigungsablauf garantiert wird und, insbesondere mit der Möglichkeit des Sprühauftrages beim Extrudieren, ein geringerer Verbrauch möglich und damit eine geringere Umweltbelastung erreicht wird.

Tabelle 1

[Mengen in Gew.-%]

| Trenn- und Gleitmittel | Polyoxyalkylen-Polysiloxan-Copolymer ① | Polyoxyalkylendiol ② | Polyoxyalkylennonylphenol ③ | Polyoxyalkylenester der Ricinolsäure ④ | Polyoxyalkylenether eines $C_{40}$-Alkohols ⑤ | Polyoxyalkylenether eines $C_{50}$-Alkohols ⑥ | Anionisches Netzmittel ⑦ | Korrosionsschutzmittel ⑧ |
|---|---|---|---|---|---|---|---|---|
| 1 erfindungsgemäß | 4 | 14 | - | 72 | - | - | 5 | 5 |
| 2 erfindungsgemäß | 2 | 18 | - | 70 | - | - | 5 | 5 |
| 3 erfindungsgemäß | 3 | 12 | - | 70 | 5 | - | 5 | 5 |
| 4 erfindungsgemäß | 4 | 8 | - | 75 | - | 3 | 5 | 5 |
| 5 nicht erfindungsgemäß | - | 80 | 20 | - | - | - | - | - |
| 6 nicht erfindungsgemäß | 50 | 50 | - | - | - | - | - | - |

① Im Handel erhältlich unter der Bezeichnung TEGOPREN® 5851

② Molverhältnis Ethylenoxid : Propylenoxid 1 : 1, mittleres Molgewicht 2800

③ 10 Mol Ethylenoxid

④ 45 Mol Ethylenoxid, mittleres Molgewicht 2300

⑤ mittleres Molgewicht 1050

⑥ mittleres Molgewicht 850

⑦ Natriumlaurylethersulfat

⑧ Triethanolammoniumsalz einer Alkylarylamidocarbonsäure, im Handel erhältlich unter der Bezeichnung HOSTACOR KS 1

Tabelle 2

| [Viskositäten in mPas] | | | | |
|---|---|---|---|---|
| Trenn- und Gleitmittel | Viskosität bei °C | | | |
| | 25 | 35 | 45 | 60 |
| 1 erfindungsgemäß | 1000 | 800 | 500 | 300 |
| 2 erfindungsgemäß | 1500 | 950 | 600 | 400 |
| 3 erfindungsgemäß | gelartig | gelartig | 2500 | 1500 |
| 4 erfindungsgemäß | gelartig | gelartig | 2000 | 1250 |
| 5 nicht erfindungsgemäß | flüssig | flüssig | flüssig | flüssig |
| 6 nicht erfindungsgemäß | flüssig | flüssig | flüssig | flüssig |

**Patentansprüche**

**1.** Trenn- und Gleitmittel für Gummiformkörper, insbesondere Krümmerschläuche, mit einem Gehalt an Polyoxyalkylen-Polysiloxan-Blockmischpolymerisaten und/oder Polyoxyalkylendiolen und/oder Polyoxyalkylenpolyolen und gegebenenfalls üblichen Zusatzstoffen, wie Netzmittel oder Korrosionsinhibitoren, dadurch gekennzeichnet, daß es mindestens 50 Gew.-% eines Polyoxyethylenesters der gegebenenfalls gehärteten Ricinolsäure mit einem mittleren Molekulargewicht von 1200 bis 4000 enthält.

**2.** Trenn- und Gleitmittel nach Anspruch 1, gekennzeichnet durch einen zusätzlichen Gehalt von bis zu 12 Gew.-% eines Polyoxyethylenethers eines aliphatischen Alkohols mit 30 bis 50 Kohlenstoffatomen mit einem mittleren Molekulargewicht von 500 bis 3000.

**3.** Trenn- und Gleitmittel nach Anspruch 2, gekennzeichnet durch einen Gehalt von
50 bis 93 Gew.-% eines Polyoxyethylenesters der gegebenenfalls gehärteten Ricinolsäure mit einem mittleren Molekulargewicht von 2000 bis 4000,
5 bis 38 Gew.-% eines Polyoxyalkylen-Polysiloxan-Blockmischpolymerisates und/oder eines Polyoxyalkylendi- oder triols,
2 bis 12 Gew.-% eines Polyoxyethylenethers eines aliphatischen Alkohols mit 30 bis 50 Kohlenstoffatomen mit einem mittleren Molekulargewicht von 500 bis 3000,
und gegebenenfalls üblichen Zusatzstoffen wie Netzmittel oder Korrosionsinhibitoren, wobei alle Bestandteile zusammen 100 Gew.-% ergeben.

**4.** Trenn- und Gleitmittel nach Anspruch 3, gekennzeichnet durch einen Gehalt von
60 bis 83 Gew.-% eines Polyoxyethylenesters der gegebenenfalls gehärteten Ricinolsäure mit einem mittleren Molekulargewicht von 2000 bis 3000,
12 bis 23 Gew.-% eines Polyoxyalkylen-Polysiloxan-Blockmischpolymerisates und/oder eines Polyoxyalkylendi- oder triols,
2 bis 12 Gew.-% eines Polyoxyethylenethers eines aliphatischen Alkohols mit 30 bis 50 Kohlenstoffatomen mit einem mittleren Molekulargewicht von 500 bis 3000 und
3 bis 5 Gew.-% eines anionaktiven Netzmittels,
wobei alle Bestandteile zusammen 100 Gew.-% ergeben.

5. Trenn- und Gleitmittel nach Anspruch 3, gekennzeichnet durch einen Gehalt von
60 bis 80 Gew.-% eines Polyoxyethylenesters der gegebenenfalls gehärteten Ricinolsäure mit einem mittleren Molekulargewicht von 2000 bis 3000,
12 bis 18 Gew.-% eines Polyoxyalkylen-Polysiloxan-Blockmischpolymerisates und/oder eines Polyoxyalkylendi- oder triols,
2 bis 12 Gew.-% eines Polyoxyethylenethers eines aliphatischen Alkohols mit 30 bis 50 Kohlenstoffatomen mit einem mittleren Molekulargewicht von 500 bis 3000,
3 bis 5 Gew.-% eines anionaktiven Netzmittels und
3 bis 5 Gew.-% eines Korrosionsinhibitors,
wobei alle Bestandteile zusammen 100 Gew.-% ergeben.

6. Trenn- und Gleitmittel nach einem oder mehreren der vorhergehenden Ansprüche, dadurch gekennzeichnet, daß der Polyoxyethylenester der gegebenenfalls gehärteten Ricinolsäure ein mittleres Molekulargewicht von 2400 bis 3000 aufweist.

7. Trenn- und Gleitmittel nach einem oder mehreren der vorhergehenden Ansprüche, dadurch gekennzeichnet, daß der Polyoxyethylenether ein Anlagerungsprodukt von Ethylenoxid an einen aliphatischen Alkohol mit 40 bis 50 Kohlenstoffatomen ist und ein mittleres Molekulargewicht von 800 bis 1500 aufweist.

8. Trenn- und Gleitmittel nach einem oder mehreren der vorhergehenden Ansprüche, dadurch gekennzeichnet, daß das Netzmittel Natriumlaurylethersulfat ist.

## Claims

1. Mould release agent and lubricant for shaped rubber articles, in particular elbow hoses, having a content of polyoxyalkylene/polysiloxane block copolymers and/or polyoxyalkylenediols and/or polyoxyalkylenepolyols and if appropriate customary additives, such as wetting agents or corrosion inhibitors, characterized in that it comprises at least 50% by weight of a polyoxyethylene ester of optionally hardened ricinoleic acid having an average molecular weight of 1200 to 4000.

2. Mould release agent and lubricant according to Claim 1, characterized by an additional content of up to 12% by weight of a polyoxyethylene ether of an aliphatic alcohol having 30 to 50 carbon atoms with an average molecular weight of 500 to 3000.

3. Mould release agent and lubricant according to Claim 2, characterized by a content of
50 to 93% by weight of a polyoxyethylene ester of optionally hardened ricinoleic acid having an average molecular weight of 2000 to 4000,
5 to 38% by weight of a polyoxyalkylene/polysiloxane block copolymer and/or a polyoxyalkylenedi- or triol,
2 to 12% by weight of a polyoxyethylene ether of an aliphatic alcohol having 30 to 50 carbon atoms with an average molecular weight of 500 to 3000,
and if appropriate customary additives, such as wetting agents or corrosion inhibitors, all the constituents together making 100% by weight.

4. Mould release agent and lubricant according to Claim 3, characterized by a content of
60 to 83% by weight of a polyoxyethylene ester of optionally hardened ricinoleic acid having an average molecular weight of 2000 to 3000,
12 to 23% by weight of a polyoxyalkylene/polysiloxane block copolymer and/or a polyoxyalkylenedi- or triol,
2 to 12% by weight of a polyoxyethylene ether of an aliphatic alcohol having 30 to 50 carbon atoms with an average molecular weight of 500 to 3000, and
3 to 5% by weight of an anionic wetting agent,
all the constituents together making 100% by weight.

5. Mould release agent and lubricant according to Claim 3, characterized by a content of
60 to 80% by weight of a polyoxyethylene ester of optionally hardened ricinoleic acid having an average molecular weight of 2000 to 3000,

12 to 18% by weight of a polyoxyalkylene/polysiloxane block copolymer and/or a polyoxyalkylenedi- or triol,
2 to 12% by weight of a polyoxyethylene ether of an aliphatic alcohol having 30 to 50 carbon atoms with an average molecular weight of 500 to 3000,
3 to 5% by weight of an anionic wetting agent, and
3 to 5% by weight of a corrosion inhibitor,
all the constituents together making 100% by weight.

**6.** Mould release agent and lubricant according to one or more of the preceding claims, characterized in that the polyoxyethylene ester of optionally hardened ricinoleic acid has an average molecular weight of 2400 to 3000.

**7.** Mould release agent and lubricant according to one or more of the preceding claims, characterized in that the polyoxyethylene ether is an addition product of ethylene oxide onto an aliphatic alcohol having 40 to 50 carbon atoms and an average molecular weight of 800 to 1500.

**8.** Mould release agent and lubricant according to one or more of the preceding claims, characterized in that the wetting agent is sodium lauryl ether-sulphate.

## Revendications

**1.** Agent de démoulage et de lubrification pour des éléments moulés en caoutchouc, en particulier pour des tuyaux coudés, contenant des copolymères séquencés de polyoxyalkylène-polysiloxane et/ou des polyoxyalkylènediols et/ou des polyoxyalkylènepolyols, et éventuellement des additifs usuels, comme des agents mouillants ou des inhibiteurs de corrosion, caractérisé en ce qu'il contient au moins 50 % en poids d'un ester de polyoxyéthylène et d'acide ricinoléique éventuellement durci, ayant un poids moléculaire moyen de 1 200 à 4 000.

**2.** Agent de démoulage et de lubrification selon la revendication 1, caractérisé en ce qu'il contient jusqu'à 12 % en poids d'un éther de polyoxyéthylène et d'un alcool aliphatique contenant de 30 à 50 atomes de carbone et a un poids moléculaire moyen de 500 à 3 000.

**3.** Agent de démoulage et de lubrification selon la revendication 2, caractérisé en ce qu'il contient :
50 à 93 % en poids d'un ester de polyoxyéthylène et d'acide ricinoléique éventuellement durci, ayant un poids moléculaire moyen de 2 000 à 4 000,
5 à 38 % en poids d'un copolymère séquencé de polyoxyalkylène-polysiloxane et/ou d'un polyoxyalkylènediol ou -triol,
2 à 12 % en poids d'un éther de polyoxyéthylène et d'un alcool aliphatique contenant de 30 à 50 atomes de carbone, ayant un poids moléculaire moyen de 500 à 3 000,
et éventuellement des additifs usuels, comme des agents mouillants ou des inhibiteurs de corrosion, l'ensemble des constituants donnant un total de 100 % en poids.

**4.** Agent de démoulage et de lubrification selon la revendication 3, caractérisé en ce qu'il contient :
60 à 83 % en poids d'un ester de polyoxyéthylène et d'acide ricinoléique éventuellement durci, ayant un poids moléculaire moyen de 2 000 à 3 000,
12 à 23 % en poids d un copolymère séquencé de polyoxyalkylène-polysiloxane et/ou d'un polyoxyalkylènediol ou -triol,
2 à 12 % en poids d'un éther de polyoxyéthylène et d'un alcool aliphatique contenant de 30 à 50 atomes de carbone, ayant un poids moléculaire moyen de 500 à 3 000, et
3 à 5 % en poids d'un agent mouillant anionique,
l'ensemble des constituants donnant un total de 100 % en poids.

**5.** Agent de démoulage et de lubrification selon la revendication 3, caractérisé en ce qu'il contient :
60 à 80 % en poids d'un ester de polyoxyéthylène et d'acide ricinoléique éventuellement durci, ayant un poids moléculaire moyen de 2 000 à 3 000,
12 à 18 % en poids d'un copolymère séquencé de polyoxyalkylène-polysiloxane et/ou d'un polyoxyalkylènediol ou -triol,
2 à 12 % en poids d'un éther de polyoxyéthylène et d'un alcool aliphatique contenant de 30 à 50

atomes de carbone, ayant un poids moléculaire moyen de 500 à 3 000,
3 à 5 % en poids d'un agent mouillant anionique, et
3 à 5 % en poids d'un inhibiteur de corrosion,
l'ensemble des constituants donnant un total de 100 % en poids.

**6.** Agent de démoulage et de lubrification selon une ou plusieurs des revendications précédentes, caractérisé en ce que l'ester de polyoxyéthylène et d'acide ricinoléique éventuellement durci a un poids moléculaire moyen de 2 400 à 3 000.

**7.** Agent de démoulage et de lubrification selon une ou plusieurs des revendications précédentes, caractérisé en ce que l'éther de polyoxyéthylène est un produit d'addition d'oxyde d'éthylène sur un alcool aliphatique contenant de 40 à 50 atomes de carbone et a un poids moléculaire moyen de 800 à 1 500.

**8.** Agent de démoulage et de lubrification selon une ou plusieurs des revendications précédentes, caractérisé en ce que l'agent mouillant est l'éther-sulfate de lauryle sodique.